# FASCICULE DE BREVET EUROPEEN

(11) **EP 2 536 976 B1**
(45) Date de publication et mention de la délivrance du brevet: **17.06.2015**
(21) Numéro de dépôt: 11702419.0
(22) Date de dépôt: 27.01.2011
(51) Int. Cl.: F23C 10/10

(54) **DISPOSITIF DESTINE EN PARTICULIER A UNE CONVERSION THERMOCHIMIQUE**
VORRICHTUNG, IM BESONDEREN FÜR THERMOCHEMISCHE UMWANDLUNG
DEVICE INTENDED IN PARTICULAR FOR THERMO-CHEMICAL CONVERSION

(30) Priorité: 16.02.2010 FR 1051104
(43) Date de publication de la demande: 26.12.2012
(73) Titulaire: Morin, Jean-Xavier, 45170 Neuville Aux Bois (FR)
(72) Inventeur: Morin, Jean-Xavier, 45170 Neuville Aux Bois (FR)
(74) Mandataire: Lenne, Laurence
(86) Numéro de dépôt international: PCT/EP2011/051140
(87) Numéro de publication internationale: WO 2011/101218

(56) Documents cités:
- EP-A2- 0 481 438
- US-A- 5 393 315
- US-A1- 2009 072 538

## Description

L'invention concerne un dispositif compact destiné en particulier à une conversion thermochimique en boucle continue de circulation de solides.

Pour capturer puis stocker les émissions de dioxyde de carbone des installations de production d'énergie utilisant des combustibles solides d'origine fossile ou non fossile, tels que les biomasses, les développements technologiques ont mené à des voies multiples qui visent notamment à éliminer l'azote de l'air en amont de l'installation en utilisant de l'oxygène produit par une unité cryogénique de séparation d'air, par exemple pour la pré capture de dioxyde de carbone par gazéification préalable des combustibles ou pour oxycombustion avec de l'oxygène quasi pur mélangé à des fumées recyclées de dioxyde de carbone et vapeur d'eau. La production d'oxygène constitue le verrou technologique et économique de ces filières qui peut être contourné par l'intégration directe de cette production d'oxygène dans le processus de combustion par conversion thermochimique

Les conversions thermochimiques de transport d'oxygène utilisant des oxydes métalliques pour la production de dioxyde de carbone pur à partir de combustibles fossiles remontent aux années 1950 et utilisaient des lits fluidisés denses interconnectés. Puis est apparue l'utilisation des mêmes techniques pour une finalité différente à atteindre qui est celle de la combustion de combustibles fossiles pour production d'électricité avec capture intégrée de dioxyde de carbone, utilisant des lits fluidisés circulants et non plus des lits fluidisés denses. Les solides circulants sont des solides porteurs d'oxygène.

Les conversions thermochimiques par gazéification à la vapeur ou pyrolyse flash de combustibles réactifs tels que des biomasses , des schistes bitumineux ou des sables bitumineux destinées à produire des carburants de synthèse ou du gaz naturel de synthèse utilisent également des réacteurs à lit fluidisés interconnectés, de type lit fluidisé circulant et lit fluidisé dense. Les solides circulants sont alors des solides inertes tels que des sables, des argiles ou des alumines ou des solides agissant comme catalyseurs ou des craqueurs de goudron, par exemple l'olivine, afin de réduire les teneurs en goudrons dans les gaz produits.

Ensuite, il est apparu que l'utilisation de lits fluidisés rapides et non plus de lits fluidisés circulants est seule adaptée à fournir les débits de particules solides porteurs d'oxygène afin d'assurer une combustion complète et non pas une oxydation partielle des combustibles.

La configuration généralement adoptée pour les conversions thermochimiques du type combustion, gazéification, pyrolyse est celle de deux boucles à lit fluidisé circulant interconnectées pour la circulation de particules solides circulants avec, pour chacune des boucles, un réacteur, un séparateur cyclone associé, une conduite de retour avec un siphon et éventuellement une barrière du soufre et du carbone. Une telle installation présente une complexité certaine et augmente les coûts d'investissement et de maintenance.

Dans un contexte de déploiement mondial de cette technologie de conversions thermochimiques, afin de pouvoir satisfaire les besoins en petites puissances pour usage industriel de moins de 100 MWe, notamment dans les pays émergents, il importe de simplifier à l'extrême la configuration et la construction pour abaisser les coûts et les délais de réalisation.

Par ailleurs dans un contexte de mise en pression des conversions thermochimiques pour les adapter à des procédés aval de traitement et d'utilisation des gaz, en turbine à gaz par exemple, ou bien dans un contexte de production d'hydrogène industriel, il importe de simplifier à l'extrême la configuration et la construction pour réduire l'encombrement global.

Enfin la cokéfaction directe entre 350 à 800 °C des sables bitumineux par voie sèche et la cokéfaction directe des schistes bitumineux, technique qui permet de séparer les huiles et le substrat solide, exige de mettre en contact ces combustibles à convertir avec des solides recyclés jouant le rôle de caloporteur, à des ratios jusqu'ici inconnus industriellement de 35 à 40 entre les solides recyclés et les combustibles à convertir.

Le document US 2009/0072538 A1 montre un dispositif selon le préambule de la revendication 1.

Le document de brevet WO 2009/021258 décrit un système de réacteur à lit fluidisé comportant deux réacteurs à lit fluidisé circulant et une ligne de particules comportant un séparateur de particules connecté au premier réacteur et équipé d'une conduite de transport des particules du premier réacteur vers le second réacteur. Le second réacteur est également équipé d'un séparateur de particules pourvu d'une conduite de retour vers le second réacteur.

Ces deux conduites sont de section transversale sensiblement égale à la section transversale de sortie des séparateurs cyclones et donc de section transversale bien inférieure à celui des séparateurs cyclones ou des réacteurs.

La fabrication d'un tel système nécessite donc l'emploi, la gestion et le stockage de nombreuses gaines de section transversale différente, ce qui rend sa fabrication relativement lourde, complexe et coûteuse.

L'objet de l'invention est de rechercher la compacité maximale d'un tel système de préférence à conversion thermochimique et d'en réduire les coûts d'investissement, tout en le rendant capable d'assurer des fonctions de conversion complète de combustibles solides d'origine fossile ou non fossile dans le cas d'une combustion et dans le cas d'une oxydation partielle.

En particulier, l'invention concerne une configuration technologique extrêmement simplifiée et à bas coût, capable d'accepter des combustibles de toute nature, liquides, gazeux, solides ou pâteux. Ceci s'applique particulièrement aux biomasses agricoles, forestières et marines, à la tourbe, aux lignites, aux schistes bitumineux, aux sables bitumineux, aux charbons sub-bitumineux et aux résidus pétroliers, aux gaz issus de méthanisation, aux gaz fatals issus d'exploitation pétrolière et gazière très riches en CO2 et enfin aux déchets urbains solides et boues. Ces unités doivent permettre la circulation intensive des solides tels que des solides inertes ou des oxydes porteurs d'oxygène, leur séparation avec des gaz, le contrôle des temps de séjour des solides dans les réacteurs et enfin l'étanchéité aux passages de gaz entre deux réacteurs pour minimiser les entrées de gaz parasite entre les deux réacteurs.

Pour ce faire, l'invention propose un dispositif comprenant un réacteur à lit fluidisé rapide comportant une sole inférieure, un premier séparateur associé et une conduite de transfert des solides en sortie de ce séparateur, cette conduite comportant un premier siphon d'étanchéité aux gaz, dispositif caractérisé en ce que ladite conduite de transfert est de section transversale sensiblement égale à celle du réacteur associé et à la section transversale maximale du séparateur associé.

Selon un mode de réalisation préféré, le dispositif comprend un premier réacteur à lit fluidisé rapide comportant une sole inférieure, un premier séparateur associé et une conduite de transfert des solides en sortie de ce séparateur vers un second réacteur comportant une sole inférieure, cette conduite comportant un premier siphon d'étanchéité aux gaz dont un premier conduit remontant de sortie débouche dans ledit second réacteur, ledit second réacteur étant connecté à un second séparateur associé connecté à une seconde conduite de transfert des particules comportant un second siphon d'étanchéité aux gaz comportant un second conduit remontant de sortie, et est caractérisé en ce qu'au moins l'une desdites conduites de transfert est de section transversale interne sensiblement égale à celle du réacteur associé et à la section transversale maximale externe du séparateur associé.

Ainsi n'est nécessaire qu'un seul type de gaine pour chaque réacteur et sa conduite de transfert associée.

L'invention propose ainsi une installation de configuration simplifiée de lit fluidisé rapide qui combine deux réacteurs intégrés en série pour réaliser une conversion thermochimique de type combustion ou gazéification de combustibles avec capture de dioxyde de carbone.

L'invention concerne également l'utilisation de ce dispositif pour former une installation à conversion thermochimique.

Dans ce cas, de préférence, le premier réacteur est un réacteur d'oxydation à lit fluidisé rapide, contenant des particules solides de réaction thermochimique, et ledit second réacteur est un réacteur de combustion et de réduction à lit fluidisé rapide.

L'invention concerne enfin l'utilisation de ce dispositif pour former une installation de traitement de sables et/ou de schistes bitumineux.

Dans ce cas, de préférence, le premier réacteur est un réacteur de pyrolyse et de craquage des sables et/ou schistes bitumineux et le second réacteur est un réacteur de combustion du coke séparé.

L'invention est décrite ci-après plus en détail à l'aide de figures ne représentant que des modes de réalisation préférés de l'invention.
La figure 1 est une vue schématique en élévation d'un dispositif selon un premier mode de réalisation de l'invention.
La figure 2 est une vue schématique développée d'un dispositif selon un deuxième mode de réalisation de l'invention.
La figure 3 est une vue en coupe horizontale d'un dispositif selon ce deuxième mode de réalisation de l'invention, selon le plan III-III de la figure 2.
Les figures 4 et 5 sont des vues schématiques développées d'un dispositif selon un troisième mode de réalisation de l'invention.

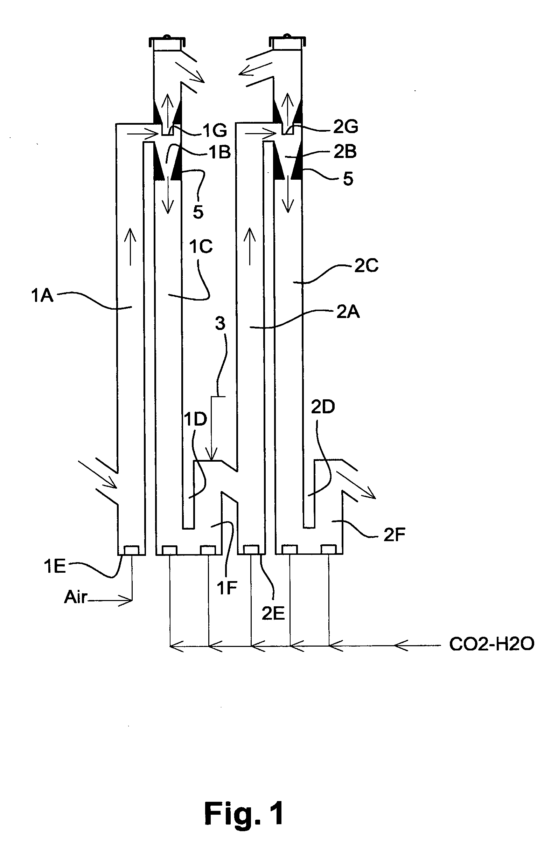

Comme représenté sur la figure 1, un dispositif conforme à l'invention comprend un premier réacteur 1A à lit fluidisé rapide de section transversale constante et comportant une sole inférieure 1E, un premier séparateur associé 1B, de préférence un séparateur cyclone à entrée latérale inclinée vers le bas d'un angle de 5 à 35° par rapport à un plan horizontal, et une conduite de transfert des solides 1C en sortie de ce séparateur cyclone vers le bas d'un second réacteur 2A de section transversale constante et comportant une sole inférieure 2E, cette conduite 1C comportant un premier siphon d'étanchéité aux gaz 1D dont un premier conduit remontant de sortie 1F débouche dans le bas dudit second réacteur 2A.

Le second réacteur 2A est connecté à un second séparateur associé 2B, de préférence un séparateur cyclone à entrée latérale inclinée vers le bas d'un angle de 5 à 35° par rapport à un plan horizontal, connecté à une seconde conduite de transfert des particules 2C comportant un second siphon d'étanchéité aux gaz 2D comportant un second conduit remontant de sortie 2F.

Selon l'invention, au moins l'une des conduites de transfert 1C, 2C est de section transversale sensiblement égale à celle du réacteur associé 1A, 2A et à la section transversale maximale du séparateur associé 1B, 2B. De préférence, comme illustré, les deux conduites de transfert 1C, 2C sont de section transversale sensiblement égale à celle du réacteur associé 1A, 2A et à la section transversale maximale du séparateur associé 1B, 2B.

Les conduites de transfert 1C, 2C sont coaxiales avec le corps du cyclone correspondant 1B, 2B qui les surplombe respectivement. Elles en sont séparées par un élément conique intérieurement 5 ou un élément simplement conique 6 qui forme l'espace interne du séparateur cyclone correspondant, ce qui assure une totale intégration et une extrême simplicité de construction puisque tous les composants sont à axe cylindrique de même section et peuvent être construits à partir du même composant brut.

Le raccordement du haut des réacteurs à lit fluidisé circulant 1A, 2A et du séparateur cyclone 1B, 2B associé est effectué par un tronçon de conduite incliné vers le bas, l'inclinaison étant comprise entre 5° et 35° par rapport à un plan horizontal. Cette inclinaison de 35 ° peut être réduite si ce tronçon possède des fluidisations auxiliaires. Ainsi, il est obtenu un écoulement en phase dense au bas de ce tronçon de conduite et un écoulement gravitaire en masse des solides est favorisé ce qui contribue à un rendement de séparation gaz/solides optimal dans le séparateur cyclone.

Si l'on considère que les conduites de transfert 1C, 2C sont de section circulaire, la hauteur verticale des séparateurs cyclones 1B, 2B est de préférence comprise entre 0.5 et 5 fois le diamètre interne des conduites, l'angle d'inclinaison de paroi du cône inférieur est de préférence compris entre 10 et 25 degrés par rapport à un plan vertical, le diamètre de la sortie inférieure des séparateurs , assurant l'évacuation gravitaire des solides, est de préférence compris entre 0,05 et 0,5 fois le diamètre interne des conduites, le diamètre de la jupe de sortie supérieure 1G, 2G des séparateurs, assurant la sortie des gaz et des solides fins, est de préférence compris entre 0,2 et 0,6 fois le diamètre interne des conduites et la hauteur de ces jupes de sortie est de préférence de 0,1 à 5 fois la hauteur de l'entrée latérale des séparateurs.

Quant aux conduits remontants 1F et 2F, ils présentent de préférence une hauteur de remontée depuis le bas des siphons 1D et 2D de préférence comprise entre 0,5 et 5 fois le diamètre du siphon correspondant 1D et 2D et un angle de retour vers le réacteur correspondant 1A et 2A compris entre 35 et 70 degrés, avec éventuellement un tronçon vertical intermédiaire selon les besoins de l'arrangement des réacteurs.

De préférence, les siphons 1D, 2D présentent également une section identique à celle des réacteurs 1A, 2A.

Au moins l'une des conduites de transfert 1C, 2C est verticale et, de préférence, comme illustré, les deux conduites de transfert 1C, 2C sont verticales. Quant aux séparateurs cyclones 1B, 2B, ils présentent une sortie des gaz verticale 1G, 2G.

Alternativement, les conduites de transfert 1C, 2C peuvent être légèrement inclinées d'un angle inférieur ou égal à 20° par rapport à un plan vertical.

Au moins un des siphons 1D, 2D présente un fond inférieur 1H, 2H disposé dans le même plan que la sole inférieure 1E, 2E du réacteur associé et, de préférence, comme illustré, les deux siphons 1D, 2D présente un fond inférieur 1H, 2H disposé dans le même plan que la sole inférieure 1E, 2E du réacteur associé.

La seconde conduite de transfert des particules 2C est destinée à transférer les particules du second réacteur 2A vers le bas du premier réacteur 1A. Il sera décrit plus loin un mode de réalisation préféré de ce transfert.

Selon une application préférée de l'invention, un tel dispositif est destiné à former une installation à conversion thermochimique.

Plus précisément, le premier réacteur 1A est alors un réacteur d'oxydation à lit fluidisé rapide, fluidisé par de l'air, contenant des particules solides de réaction thermochimique, par exemple des oxydes métalliques à base de fer, de nickel, de titane, de cuivre et/ou de pervoskites, de préférence des oxydes métalliques, et le second réacteur 2A est un réacteur de combustion et de réduction à lit fluidisé rapide, fluidisé par du dioxyde de carbone mélangé à de la vapeur d'eau.

En sortie des gaz du premier cyclone 1B, est récupéré de l'air appauvri en oxygène qui est transmis à un dispositif de refroidissement, un dispositif de filtration et un dispositif d'évacuation à l'atmosphère.

Les premier et second siphons 1D, 2D sont fluidisés par de la vapeur d'eau éventuellement mélangée avec du dioxyde de carbone recyclé. Ainsi le réacteur 2A, est isolé du réacteur à lit fluidisé 1A en son amont et en son aval, en ce qui concerne le gaz.

Lorsque le combustible est solide, le combustible est alimenté par chute gravitaire au sommet du siphon 1D alimentant le réacteur 2A, au moyen de l'alimentation 3, comme illustré sur la figure 1.

Lorsque le combustible est liquide ou gazeux, il est alimenté directement dans le réacteur à lit fluidisé rapide 2A par des injections, mélangé éventuellement avec du dioxyde de carbone et de la vapeur d'eau.

Lorsque le combustible est sous forme pâteuse ou en suspension, il est introduit par pompage et grâce à des injections réparties dans le second réacteur à lit fluidisé rapide 2A.

Lorsque l'installation est destinée à une combustion, comme représentée sur la figure 1, la sortie des gaz du second cyclone 2B constitué du gaz de conversion généré dans le second réacteur 2A entre les oxydes métalliques et le combustible introduit et contenant notamment le dioxyde de carbone issu de la conversion, est connectée à un dispositif de refroidissement, un dispositif de filtration et un dispositif de condensation, pour le transport et le stockage du dioxyde de carbone.

Lorsque l'installation est destinée à une gazéification ou une combustion partielle, la sortie des gaz du second cyclone 2B constitué du gaz de conversion généré dans le second réacteur 2A entre les oxydes métalliques et le combustible introduit et contenant notamment le dioxyde de carbone, le monoxyde de carbone, l'hydrogène, issus de la conversion, est connectée à un dispositif de refroidissement, un dispositif de piégeage des alcalins de type Na₂O et K₂O vers 600°C et un dispositif de piégeage de goudrons vers 400 à 800°C, de préférence vers 400°C, pour l'utilisation en gaz d'alimentation de moteur ou après une compression préalable en turbine à gaz ou directement en gaz d'alimentation de brûleurs d'une chaudière existante ou nouvelle.

Les conversions thermochimiques par gazéification à la vapeur ou pyrolyse flash de combustibles réactifs tels que des biomasses, des schistes bitumineux ou des sables bitumineux tels que des biomasses, destinées à produire des carburants de synthèse ou du gaz naturel de synthèse peuvent utiliser également le dispositif conforme à l'invention. Les solides circulants sont alors des solides inertes tels que des sables, des argiles ou des alumines ou des solides de type olivine agissant comme catalyseurs afin de réduire les teneurs en goudrons dans les gaz produits.

La cokéfaction directe entre 350 et 800 °C des sables bitumineux par voie sèche et la cokéfaction directe des schistes bitumineux, technique qui permet de séparer les huiles et le substrat solide, exige de mettre en contact ces combustibles à convertir avec des solides recyclés jouant le rôle de caloporteur , à des ratios jusqu'ici inconnus industriellement de 35 à 40 entre les solides recyclés et les combustibles à convertir. Le dispositif conforme à l'invention peut également être utilisé, les solides circulants sont alors des solides inertes tels que des sables ou des minéraux contenus dans les combustibles à convertir.

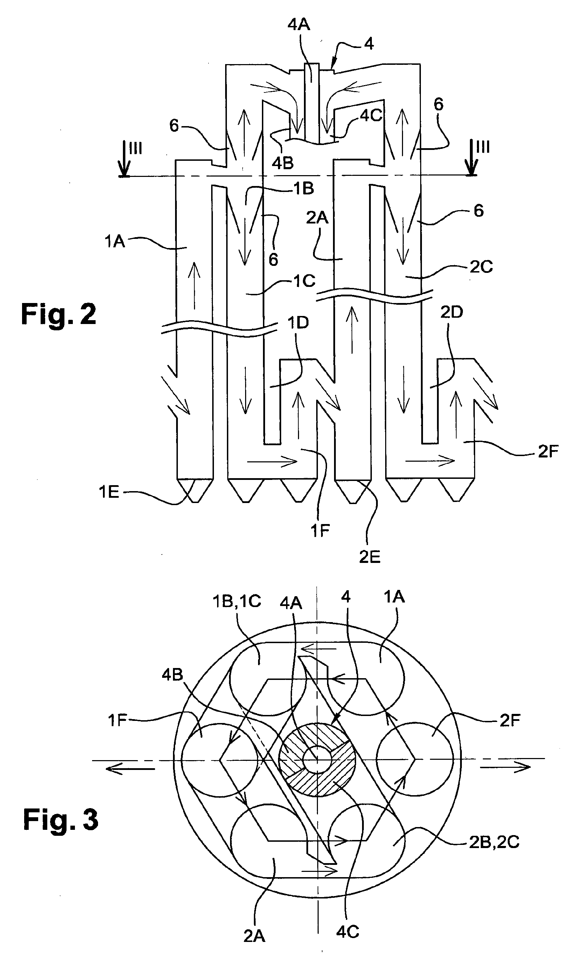

Les figures 2 et 3 illustrent un second mode de réalisation de l'invention qui assure une compacité particulièrement importante du dispositif pouvant être également être utilisé pour toutes les applications déjà précisées ci-dessus entre autres.

Les deux conduites de transfert 1C, 2C sont verticales et les deux conduits remontant de sortie 1F, 2F sont verticaux et l'axe central vertical du premier réacteur 1A, l'axe central vertical du premier séparateur associé 1B et de la première conduite de transfert 1C, l'axe central vertical du premier conduit remontant de sortie 1F, l'axe central vertical du second réacteur 2A, l'axe central vertical du second séparateur associé 2B et de la seconde conduite de transfert 2C, et l'axe central vertical du second conduit remontant de sortie 2F sont les sommets d'un hexagone, de préférence régulier, comme visible sur la figure 3.

Le dispositif comporte alors un pylône central 4 de support mécanique du premier réacteur 1A, du premier séparateur associé 1B, du premier conduit remontant de sortie 1F, du second réacteur 2A, du second séparateur associé 2B et du second conduit remontant de sortie 2F.

De préférence, pour des petites unités, le pylône 4 comporte un tube central de refroidissement 4A et au moins une enveloppe externe connectée à la sortie des gaz d'au moins un desdits séparateurs. De préférence, comme illustré, il comporte deux enveloppes externes 4B, 4C connectée respectivement à la sortie des gaz du premier séparateur 1B et du second séparateur 2B.

Dans un contexte d'enceinte pressurisée, cet agencement simplifie grandement la conception mécanique d'ensemble et permet de s'accommoder de la dilatation thermique des enveloppes.

A la place de ce type de pylône, selon la taille de l'unité, des échangeurs verticaux de refroidissements des gaz issus des séparateurs cyclones 1B, 2B sont disposés au-dessus des conduits remontants 1F, 2F des siphons et s'inscrivent dans le pas hexagonal des composants.

Dans ces premiers modes de réalisation, la hauteur des réacteurs 1A, 2A est la même. Il peut être nécessaire qu'ils aient des hauteurs différentes, car les réactions mises en jeu dans chacun des réacteurs peuvent avoir des cinétiques très différentes, par exemple une oxydation rapide et une réduction lente des solides porteurs d'oxygène ou une conversion lente des combustibles en cours de réduction.

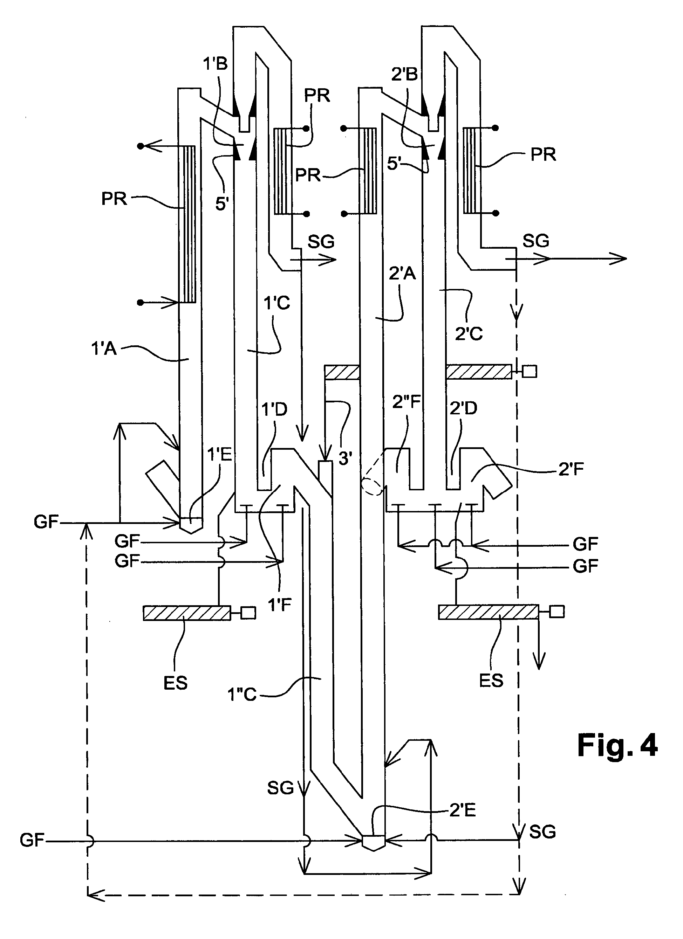

La figure 4 représente un troisième mode de réalisation où les réacteurs 1A, 2A ont une hauteur différente.

Comme représenté sur cette figure, un dispositif conforme à l'invention, qui de préférence est également installé selon une boucle hexagonale comme précédemment, comprend un premier réacteur 1'A à lit fluidisé rapide de section transversale constante et comportant une sole inférieure 1'E, un premier séparateur associé 1'B, de préférence un séparateur cyclone à entrée latérale inclinée vers le bas d'un angle de 5 à 35° par rapport à un plan horizontal, et une conduite de transfert des solides 1'C en sortie de ce séparateur cyclone vers le bas d'un second réacteur 2'A de section transversale constante et comportant une sole inférieure 2'E, cette conduite 1'C comportant un premier siphon d'étanchéité aux gaz 1'D dont un premier conduit remontant de sortie 1'F débouche dans le bas dudit second réacteur 2'A.

Le second réacteur 2'A est connecté à un second séparateur associé 2'B, de préférence un séparateur cyclone à entrée latérale inclinée vers le bas d'un angle de 5 à 35° par rapport à un plan horizontal, connecté à une seconde conduite de transfert des particules 2'C comportant un second siphon d'étanchéité aux gaz 2'D comportant un second conduit remontant de sortie 2'F.

Selon l'invention, au moins l'une des conduites de transfert 1'C, 2'C est de section transversale sensiblement égale à celle du réacteur associé 1'A, 2'A et à la section transversale maximale du séparateur associé 1'B, 2'B. De préférence, comme illustré, les deux conduites de transfert 1'C, 2'C sont de section transversale sensiblement égale à celle du réacteur associé 1'A, 2'A et à la section transversale maximale du séparateur associé 1'B, 2'B. De préférence, les siphons 1'D, 2'D présentent également une section identique à celle des réacteurs 1'A, 2'A.

Les conduites de transfert 1'C, 2'C sont coaxiales avec le corps du cyclone correspondant 1'B, 2'B qui les surplombe respectivement. Elles en sont séparées par un élément conique intérieurement 5' qui forme l'espace interne du séparateur cyclone correspondant, ce qui assure une totale intégration et une extrême simplicité de construction puisque tous les composants sont à axe cylindrique de même section et peuvent être construits à partir du même composant brut.

Selon ce mode de réalisation, la première conduite de transfert 1'C est donc prolongée en aval du premier siphon 1'D d'un second tronçon de conduite de transfert 1"C de même section et également verticale, assurant le transfert vers le bas du second réacteur 2'A.

Selon l'application préféré à une boucle thermochimique, le bas du premier réacteur 1'A est alimenté en gaz de fluidisation GF et comporte également un niveau de fluidisation secondaire supérieur pour agir sur le remplissage en solides de la zone basse du réacteur et agir sur leur temps de séjour. Il en est de même du second réacteur 2'A.

Par ailleurs, l'un des deux réacteurs peut posséder une boucle de recirculation de solides sur lui-même, de façon à constituer un arrangement global de circulation de solides en une boucle et demie de circulation de solides au lieu d'une seule. Ceci présente l'avantage de pouvoir assurer des longs temps de séjour des solides dans l'un des deux réacteurs.

Selon l'exemple représenté, c'est le second réacteur 2'A qui possède une boucle de recirculation sur lui-même, au moyen d'un conduit remontant supplémentaire 2"F installé sur le second siphon 2'D.

Par ailleurs, chaque bas de siphon 1'D, 2'D peut constituer une chambre réactionnelle supplémentaire, complémentaire à chaque réacteur 1'A, 2'A afin d'assurer l'injection de gaz réactifs ou inertes, de solides réactifs ou inertes, d'élutrier et/ou d'attriter des solides fins contenus dans le lit en circulation. Comme illustré sur la figure 4, ces bas de siphon sont alors alimentés en gaz de fluidisation GF et sont équipés d'une évacuation de solides ES.

De préférence, le gaz sortant SG de chaque séparateur 1'B, 2'B est recyclé sur chaque réacteur 1'A, 2'A, pour contribuer à alimenter sa propre fluidisation, mais aussi de façon croisée avec le réacteur opposé pour constituer des arrangements de réacteurs en série du côté des fumées. Un exemple typique d'une telle application est le « retorting » (en français un ensemble de craquage ou pyrolyse et d'évaporation) indirect de sables ou de schistes bitumineux, dans lequel les fumées de combustion d'un réacteur alimentent la fluidisation de l'autre réacteur qui assure le « retorting » des sables ou des schistes bitumineux.

Des panneaux radiaux de refroidissement PR peuvent équiper le haut des réacteurs 1'A, 2'A ainsi que les conduites de sortie et de recyclage des gaz sortant SG des séparateurs 1'B, 2'B.

Le premier siphon 1'D comporte une alimentation 3' en solides ou/et en appoint de lit à convertir.

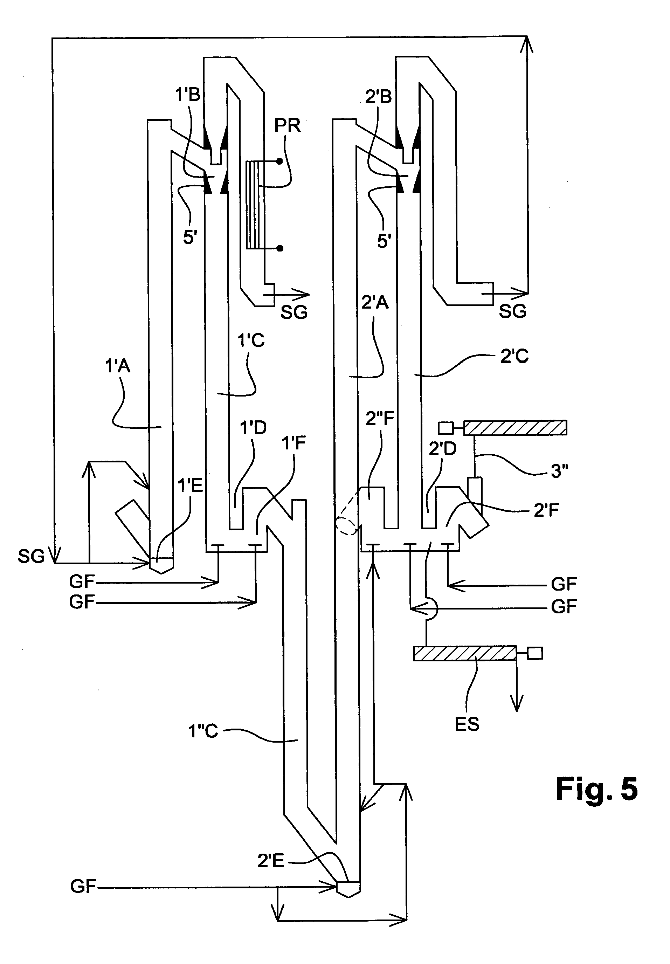

La figure 5 représente un dispositif du même type, appliqué au traitement de sables ou de schistes bitumineux.

Dans cette application, le premier réacteur 1'A est un réacteur de pyrolyse et de craquage et le second réacteur 2'A est un réacteur de combustion du coke séparé, alimenté en sable ou en schiste avec du coke déposé par la première conduite de transfert 1'C, 1"C. Le gaz de fluidisation GF est de l'air de combustion.

L'alimentation 3" en sables ou schistes bitumineux est assurée au niveau du second siphon 2'D. Dans ce cas, le bas du second siphon 2'D constitue une chambre réactionnelle supplémentaire, complémentaire au second réacteur 2'A. Les bas de ce siphon est alors alimenté en gaz de fluidisation GF et est équipé d'une évacuation de solides ES constitués du sable ou du schiste traité.

Les fumées chaudes SG sortant du second séparateur 2'B sont totalement recyclées sur le premier réacteur 1'A, afin d'assurer sa fluidisation et des panneaux radiaux de refroidissement PR équipent seulement la conduite de sortie des gaz sortant SG du premier séparateur 1'B constitué de produits pétroliers évaporés.

La description ci-dessus décrit des modes de réalisation préférés mais l'invention couvre également des variantes de ces modes de réalisation.

La section des réacteurs et des autres éléments peut être circulaire, carrée ou rectangulaire, avec de préférence un rapport inférieur à 1,5 entre la largeur et la longueur.

La section d'un des réacteurs et donc de sa conduite de transfert associée peut être différente de la section de l'autre réacteur et donc de sa conduite de transfert associée, de préférence avec un rapport inférieur à 1,5.

A titre d'exemple, le dispositif conforme à l'invention s'applique à toute taille d'installation, le diamètre ou la largeur des réacteurs pouvant être comprise entre 0,03 et 10 mètres, leur hauteur pouvant être comprise entre 0,5 et 25 mètres et les réacteurs fonctionnant à une pression atmosphérique de 30 bars.

## Revendications

1. Dispositif comprenant un réacteur (1A, 1'A) à lit fluidisé rapide comportant une sole inférieure (1E, 1'E), un premier séparateur associé (1B, 1'B) et une conduite de transfert (1C, 1'C) des solides en sortie de ce séparateur (1B, 1'B), cette conduite (1C, 1'C) comportant un premier siphon (1D, 1'D) d'étanchéité aux gaz, dispositif **caractérisé en ce que** ladite conduite de transfert (1C, 1'C) est de section transversale sensiblement égale à celle du réacteur associé (1A, 1'A) et à la section transversale maximale du séparateur associé (1B, 1'B).

2. Dispositif selon la revendication 1 comprenant un premier réacteur (1A, 1'A) à lit fluidisé rapide comportant une sole inférieure (1E, 1'E), un premier séparateur associé (1B, 1'B) et une conduite de transfert (1C, 1'C) des solides en sortie de ce séparateur (1B, 1'B) vers un second réacteur (2A, 2'A) comportant une sole inférieure (2E, 2'E), cette conduite (1C, 1'C) comportant un premier siphon (1D, 1'D) d'étanchéité aux gaz dont un premier conduit remontant (1F, 1'F) de sortie débouche dans ledit second réacteur (2A, 2'A), ledit second réacteur étant connecté à un second séparateur associé (2B, 2'B) connecté à une seconde conduite de transfert (2C, 2'C) des particules comportant un second siphon (2D, 2'D) d'étanchéité aux gaz comportant un second conduit remontant (2F, 2'F) de sortie, dispositif **caractérisé en ce qu'**au moins l'une desdites conduites de transfert (1C, 1'C, 2C, 2'C) est de section transversale sensiblement égale à celle du réacteur associé (1A, 1'A, 2A, 2'A) et à la section transversale maximale du séparateur associé (1B, 1'B, 2B, 2'B).

3. Dispositif selon la revendication précédente, **caractérisé en ce qu'**au moins l'une desdites conduites de transfert (1C, 1'C, 2C, 2'C) est verticale.

4. Dispositif selon la revendication 2 ou 3, **caractérisé en ce que** lesdits séparateurs (1B, 1'B, 2B, 2'B) sont des séparateurs cyclones coaxiaux à la conduite de transfert associée, à entrée latérale inclinée vers le bas d'un angle de 5 à 35° par rapport à un plan horizontal.

5. Dispositif selon l'une des revendications 2 à 4, **caractérisé en ce qu'**au moins un desdits siphons (1D, 1'D, 2D) présente un fond inférieur disposé dans le même plan que la sole inférieure (1E, 1'E, 2E) du réacteur associé.

6. Dispositif selon l'une des revendications 2 à 5, **caractérisé en ce que** ladite seconde conduite de transfert (2C, 2'C) des particules est destinée à transférer les particules dudit second réacteur (2A, 2'A) vers ledit premier réacteur (1A, 1'A).

7. Dispositif selon l'une des revendications 3 à 6, **caractérisé en ce que** les deux dites conduites de transfert (1C, 2C) sont verticales et les deux dits conduits remontants (1F, 2F) de sortie sont verticaux et **en ce que** l'axe central vertical dudit premier réacteur (1A), l'axe central vertical dudit premier séparateur associé (1B), l'axe central vertical dudit premier conduit remontant de sortie (1F), l'axe central vertical dudit second réacteur (2A), l'axe central vertical dudit second séparateur associé (2B) et l'axe central vertical dudit second conduit remontant de sortie (2F) sont les sommets d'un hexagone.

8. Dispositif selon la revendication précédente, **caractérisé en ce que** ledit hexagone est régulier.

9. Dispositif selon la revendication 7 ou 8, **caractérisé en ce qu'**il comporte un pylône central (4) de support mécanique dudit premier réacteur (1A), dudit premier séparateur associé (1B), dudit premier conduit remontant de sortie (1F), dudit second réacteur (2A), dudit second séparateur associé (2B)et dudit second conduit remontant de sortie (2F).

10. Dispositif selon la revendication précédente, **caractérisé en ce que** ledit pylône (4) comporte un tube central de refroidissement (4A) et au moins une enveloppe externe (4B, 4C) connectée à la sortie des gaz d'au moins un desdits séparateurs (1B, 2B).

11. Installation à conversion thermochimique constituée d'un dispositif selon l'une des revendications 2 à 10.

12. Installation selon la revendication 11, **caractérisée en ce que** ledit premier réacteur (1A) est un réacteur d'oxydation à lit fluidisé rapide, contenant des particules solides de réaction thermochimique, et ledit second réacteur (2A) est un réacteur de combustion et de réduction à lit fluidisé rapide.

13. Installation selon la revendication 12, **caractérisée en ce que** ledit premier réacteur (1A) est fluidisé par de l'air et ledit second réacteur (2A) est fluidisé par du dioxyde de carbone.

14. Installation selon la revendication 13, **caractérisée en ce que** ledit premier siphon (1D) et ledit second siphon (2D) sont alimentés en un mélange de vapeur d'eau et dioxyde de carbone.

15. Installation selon l'une des revendications 12 à 14, **caractérisée en ce que** ledit premier siphon (1D) comporte une alimentation en combustible.

16. Installation de traitement de sables et/ou de schistes bitumineux constituée d'un dispositif selon l'une des revendications 2 à 11.

17. Installation selon la revendication 16, **caractérisée en ce que** le premier réacteur (1'A) est un réacteur de pyrolyse et de craquage des sables et/ou schistes bitumineux et le second réacteur (2'B) est un réacteur de combustion du coke séparé.

18. Installation selon la revendication 17, **caractérisée en ce que** ledit premier réacteur (1'A) est fluidisé par des fumées sortantes du second réacteur et ledit second réacteur (2'A) est fluidisé par de l'air.

19. Installation selon la revendication 18, **caractérisée en ce que** ledit premier siphon (1'D) et ledit second siphon (2'D) sont fluidisés par de l'air.

20. Installation selon l'une des revendications 16 à 19, **caractérisée en ce que** ledit second siphon (2'D) comporte une alimentation en sables et/ou en schistes bitumineux.

## Patentansprüche

1. Vorrichtung, die einen Reaktor (1A, 1'A) mit schneller Wirbelschicht umfasst, der eine untere Sohle (1E, 1'E), einen ersten zugeordneten Abscheider (1 B, 1'B) und eine Transferleitung (1C, 1'C) der aus diesem Abscheider (1B, 1'B) austretenden Feststoffe aufweist, wobei diese Leitung (1C, 1'C) einen ersten gasdichten Siphon (1 D, 1'D) aufweist, wobei die Vorrichtung **dadurch gekennzeichnet ist, dass** die Transferleitung (1 C, 1'C) einen Querschnitt hat, der etwa gleich dem des zugeordneten Reaktors (1A, 1'A) und dem maximalen Querschnitt des zugeordneten Abscheiders (1 B, 1'B) ist.

2. Vorrichtung nach Anspruch 1, die einen ersten Reaktor (1A, 1'A) mit schneller Wirbelschicht umfasst, der eine untere Sohle (1 E, 1'E), einen ersten zugeordneten Abscheider (1B, 1'B) und eine Transferleitung (1C, 1'C) der aus diesem Abscheider (1 B, 1'B) austretenden Feststoffe zu einem zweiten Reaktor (2A, 2'A) aufweist, der eine untere Sohle (2E, 2'E) aufweist, wobei diese Leitung (1 C, 1'C) einen ersten gasdichten Siphon (1 D, 1'D) aufweist, von dem eine erste aufsteigende Ausgangsleitung (1 F, 1'F) in den zweiten Reaktor (2A, 2'A) ausmündet, wobei der zweite Reaktor mit einem zweiten zugeordneten Abscheider (2B, 2'B) verbunden ist, der mit einer zweiten Partikeltransferleitung (2C, 2'C) verbunden ist, die einen zweiten gasdichten Siphon (2D, 2'D) aufweist, der eine zweite aufsteigende Ausgangsleitung (2F, 2'F) aufweist, wobei die Vorrichtung **dadurch gekennzeichnet ist, dass** mindestens eine der Transferleitungen (1C, 1'C, 2C, 2'C) einen Querschnitt hat, der etwa gleich dem des zugeordneten Reaktors (1A, 1'A, 2A, 2'A) und dem maximalen Querschnitt des zugeordneten Abscheiders (1 B, 1'B, 2B, 2'B) ist.

3. Vorrichtung nach vorangehendem Anspruch, **dadurch gekennzeichnet, dass** mindestens eine der Transferleitungen (1 C, 1'C, 2C, 2'C) vertikal ist.

4. Vorrichtung nach Anspruch 2 oder 3, **dadurch gekennzeichnet, dass** die Abscheider (1 B, 1'B, 2B, 2'B) zu der zugeordneten Transferleitung koaxiale Zyklonabscheider mit in einem Winkel von 5 bis 35° im Verhältnis zu einer horizontalen Ebene nach unten geneigtem Seiteneingang sind.

5. Vorrichtung nach einem der Ansprüche 2 bis 4, **dadurch gekennzeichnet, dass** mindestens einer der Siphone (1 D, 1'D, 2D) einen unteren Boden aufweist, der in derselben Ebene wie die untere Sohle (1 E, 1'E, 2E) des zugeordneten Reaktors angeordnet ist.

6. Vorrichtung nach einem der Ansprüche 2 bis 5, **dadurch gekennzeichnet, dass** die zweite Partikeltransferleitung (2C, 2'C) für den Transfer der Partikel vom zweiten Reaktor (2A, 2'A) zum ersten Reaktor (1A, 1'A) bestimmt ist.

7. Vorrichtung nach einem der Ansprüche 3 bis 6, **dadurch gekennzeichnet, dass** die zwei Transferleitungen (1C, 2C) vertikal sind und die zwei aufsteigenden Ausgangsleitungen (1 F, 2F) vertikal sind und dass die vertikale zentrale Ache des ersten Reaktors (1A), die vertikale zentrale Achse des ersten zugeordneten Abscheiders (1 B), die vertikale zentrale Achse der ersten aufsteigenden Ausgangsleitung (1 F), die vertikale zentrale Achse des zweiten Reaktors (2A), die vertikale zentrale Achse des zweiten zugeordneten Abscheiders (2B) und die vertikale zentrale Achse der zweiten aufsteigenden Ausgangsleitung (2F) die Spitzen eines Sechsecks sind.

8. Vorrichtung nach vorangehendem Anspruch, **dadurch gekennzeichnet, dass** das Sechseck regelmäßig ist.

9. Vorrichtung nach Anspruch 7 oder 8, **dadurch gekennzeichnet, dass** sie einen zentralen Mast (4) für die mechanische Stützung des ersten Reaktors (1A), des ersten zugeordneten Abscheiders (1 B), der ersten aufsteigenden Ausgangsleitung (1 F), des zweiten Reaktors (2A), des zweiten zugeordneten Abscheiders (2B) und der zweiten aufsteigenden Ausgangsleitung (2F) aufweist.

10. Vorrichtung nach vorangehendem Anspruch, **dadurch gekennzeichnet, dass** der Mast (4) ein zentrales Kühlrohr (4A) und mindestens einen externen Mantel (4B, 4C) aufweist, der mit dem Gasausgang von mindestens einem der Abscheider (1 B, 2B) verbunden ist.

11. Thermochemische Konversionsanlage, die von einer Vorrichtung nach einem der Ansprüche 2 bis 10 gebildet ist.

12. Anlage nach Anspruch 11, **dadurch gekennzeichnet, dass** der erste Reaktor (1A) ein Oxidationsreaktor mit schneller Wirbelschicht ist, der feste thermochemische Reaktionspartikel enthält, und der zweite Reaktor (2A) ein Verbrennungs- und Reduktionsreaktor mit schneller Wirbelschicht ist.

13. Anlage nach Anspruch 12, **dadurch gekennzeichnet, dass** der erste Reaktor (1A) mit Luft fluidisiert ist und der zweite Reaktor (2A) mit Kohlendioxid fluidisiert ist.

14. Anlage nach Anspruch 13, **dadurch gekennzeichnet, dass** der erste Siphon (1D) und der zweite Siphon (2D) mit einem Gemisch aus Wasserdampf und Kohlendioxid versorgt sind.

15. Anlage nach einem der Ansprüche 12 bis 14, **dadurch gekennzeichnet, dass** der erste Siphon (1 D) eine Brennstoffversorgung aufweist.

16. Anlage für die Behandlung von bituminösen Sanden und/oder Schiefern, die von einer Vorrichtung nach einem der Ansprüche 2 bis 11 gebildet ist.

17. Anlage nach Anspruch 16, **dadurch gekennzeichnet, dass** der erste Reaktor (1'A) ein Spalt- und Pyrolysereaktor der bituminösen Sande und/oder Schiefer ist und der zweite Reaktor (2'B) ein Verbrennungsreaktor des abgeschiedenen Koks ist.

18. Anlage nach Anspruch 17, **dadurch gekennzeichnet, dass** der erste Reaktor (1'A) durch aus dem zweiten Reaktor austretende Rauchgase fluidisiert ist und der zweite Reaktor (2'A) durch Luft fluidisiert ist.

19. Anlage nach Anspruch 18, **dadurch gekennzeichnet, dass** der erste Siphon (1'D) und der zweite Siphon (2'D) durch Luft fluidisiert sind.

20. Anlage nach einem der Ansprüche 16 bis 19, **dadurch gekennzeichnet, dass** der zweite Siphon (2'D) eine Versorgung mit bituminösen Sanden und/oder Schiefern aufweist.

## Claims

1. A device comprising a rapid fluidized bed reactor (1A, 1'A) including a lower base plate (1 E, 1'E), a first associated separator (1 B, 1'B) and a transfer pipe (1 C, 1'C) for transferring solids leaving that separator (1 B, 1'B), said pipe (1 C, 1'C) including a first siphon (1 D, 1'D) sealing against gases, the device being **characterized in that** said transfer pipe (1 C, 1'C) has a cross-section substantially equal to that of the associated reactor (1A, 1'A) and the maximum cross-section of the associated separator (1 B, 1'B).

2. The device according to claim 1, comprising a first rapid fluidized bed reactor (1A, 1'A) including a lower base plate (1 E, 1'E), a first associated separator (1 B, 1'B) and a transfer pipe (1 C, 1'C) for transferring solids leaving that separator (1 B, 1'B) to a second reactor (2A, 2'A) including a lower base plate (2E, 2'E), that pipe (1 C, 1'C) including a first siphon (1 D, 1'D) sealing against gases, a first outlet riser (1 F, 1'F) of which emerges in said second reactor (2A, 2'A), said second reactor being connected to a second associated separator (2B, 2'B) connected to a second particle transfer pipe (2C, 2'C) including a second siphon (2D, 2'D) sealing against gases including a second outlet riser (2F, 2'F), the device being **characterized in that** at least one of said transfer pipes (1 C, 1'C, 2C, 2'C) has a cross-section substantially equal to that of the associated reactor (1A, 1'A, 2A, 2'A) and the maximum cross-section of the associated separator (1 B, 1'B, 2B, 2'B).

3. The device according to the preceding claim, **characterized in that** at least one of said transfer pipes (1 C, 1'C, 2C, 2'C) is vertical.

4. The device according to claim 2 or 3, **characterized in that** said separators (1 B, 1'B, 2B, 2'B) are cyclone separators coaxial to the associated transfer pipe, with a lateral inlet downwardly inclined by an angle of 5 to 35° relative to a horizontal plane.

5. The device according to one of claims 2 to 4, **characterized in that** at least one of said siphons (1 D, 1'D, 2D) has a lower bottom positioned in the same plane as the lower base plate (1 E, 1'E, 2E) of the associated reactor.

6. The device according to one of claims 2 to 5, **characterized in that** said second particle transfer pipe (2C, 2'C) is designed to transfer the particles from said second reactor (2A, 2'A) to said first reactor (1A, 1'A).

7. The device according to one of claims 3 to 6, **characterized in that** said two transfer pipes (1 C, 2C) are vertical and said two outlet risers (1 F, 2F) are vertical, and **in that** the vertical central axis of said first reactor (1A), the vertical central axis of said first associated separator (1 B), the vertical central axis of said first outlet riser (1 F), the vertical central axis of said second reactor (2A), the vertical central axis of said second associated separator (2B) and the vertical central axis of said second outlet riser (2F) are the apices of a hexagon.

8. The device according to the preceding claim, **characterized in that** said hexagon is regular.

9. The device according to claim 7 or 8, **characterized in that** it comprises a central mechanical support pylon (4) of said first reactor (1A), said first associated separator (1 B), said first outlet riser (1 F), said second reactor (2A), said second associated separator (2B) and said second outlet riser (2F).

10. The device according to the preceding claim, **characterized in that** said pylon (4) includes a central cooling tube (4A) and at least one outer enclosure (4B, 4C) connected to the gas outlet of at least one of said separators (1 B, 2B).

11. A thermochemical conversion installation, made up of the device according to one of claims 2 to 10.

12. The installation according to claim 11, **characterized in that** said first reactor (1 A) is a rapid fluidized bed oxidation reactor, containing solid thermochemical reaction particles, and said second reactor (2A) is a rapid fluidized bed combustion and reduction reactor.

13. The installation according to claim 12, **characterized in that** said first reactor (1A) is fluidized by air and said second reactor (2A) is fluidized by carbon dioxide.

14. The installation according to claim 13, **characterized in that** said first siphon (1 D) and said second siphon (2D) are supplied with a mixture of steam and carbon dioxide.

15. The installation according to one of claims 12 to 14, **characterized in that** said first siphon (1 D) includes a fuel supply.

16. An installation for treating bituminous sands and/or shales, made up of a device according to one of claims 2 to 11.

17. The installation according to claim 16, **characterized in that** the first reactor (1'A) is a pyrolysis and cracking reactor for the bituminous sands and/or shales and the second reactor (2'B) is a combustion reactor for the separated coke.

18. The installation according to claim 17, **characterized in that** said first reactor (1'A) is fluidized by fumes leaving the second reactor, and said second reactor (2'A) is fluidized by air.

19. The installation according to claim 18, **characterized in that** said first siphon (1'D) and said second siphon (2'D) are fluidized by air.

20. The installation according to one of claims 16 to 19, **characterized in that** said second siphon (2'D) includes a supply of bituminous sands and/or shales.
